# EUROPEAN PATENT APPLICATION

(11) **EP 0 605 146 A1**
(43) Date of publication of application: **06.07.1994**
(21) Application number: 93310136.2
(22) Date of filing: 15.12.1993
(51) Int. Cl.: G02F 1/1339, G02F 1/136

(54) **Flat panel display assembly and method for making the panel**

(30) Priority: 28.12.1992 US 997436
(71) Applicant: XEROX CORPORATION, Rochester New York 14644 (US)
(72) Inventor: Chuang, Tzu-Chin, Saratoga, California 95070 (US); Ho, Jackson, Palo Alto, California 94301 (US)
(74) Representative: Goode, Ian Roy

(57) **Abstract**

A flat panel liquid crystal display, and method for forming the display, wherein spacers (11) are lithographically patterned and etched on the cover sheet (10) of the display, and the cover sheet is assembled on an active matrix substrate (20) with the spacers directed toward the active matrix substrate. A liquid crystal material (32) is provided in the gap (31) between the cover sheet and active matrix substrate. The active matrix substrate may have pixels thereon each having a plurality of components, with the spacers (11) being aligned with the same element (23) of each of a plurality of the pixels.

## Description

This invention relates to flat panel assembly having integrated spacers, such as a flat panel liquid crystal display assembly, and to a method for making the panel assembly.

In flat panel display assemblies, for example for liquid crystal displays, the cell gap between a cover sheet and an active substrate is generally formed by sandwiching a large number of tiny latex spherical spacers between the active matrix substrate and a cover sheet. The spacers are fluidized in a solvent mixture and sprayed onto the active matrix substrate and/or the cover sheet. It has been found that the control and uniformity of the cell gap formed by sandwiching latex spherical spacers in the gap in this manner is often unsatisfactory. Thus, it is difficult to control the distribution and position of the spacers when the mixture is sprayed onto a substrate. In this technique, since the spacers are randomly deposited on different structures on the active-matrix substrate, and/or on the cover sheet, an uneven cell gap across the display may result. In addition, if the spacers are not fluidized in the solvent during spraying, they may cluster together to produce high spots in the cell gap. Even individual spacers can be noticeable as white spots in the displayed image.

The present invention is directed to the provision of a flat panel assembly and method for making the assembly that overcomes the above discussed problem.

According to the present invention, there is provided a method for fabricating a flat panel structure comprising lithographically patterning and etching a cover sheet to have a surface with a plurality of spacers extending therefrom, providing an active matrix substrate, and assembling said cover sheet on said active matrix substrate with said surface directed toward said active matrix substrate, whereby a gap is formed between said active matrix substrate and portions of said cover sheet between said spacers.

Briefly stated, in order to overcome the above discussed problem, spacers for the assembly are created by lithographically patterning and etching one of the flat panel elements, for example the cover sheet of a liquid crystal display. The positions and distribution of the spacers on the cover sheet substrate can be configured to be aligned in relation to the structure of the active matrix layer, to maximize effective operation of the assembly and to minimize visual obstruction. For example, in a liquid crystal display, the spacers may be aligned with the same element in each of the pixels on the active matrix substrate.

The problem of spacer clustering is eliminated by lithographically patterning and etching the spacers on the cover sheet substrate. The position and distribution of the spacers on the cover sheet can be designed to be aligned against the same structure on the active matrix during the cell assembly to ensure that the gap between the cover sheet and the active matrix substrate is not affected by the heights of structures on the active matrix substrate. The heights of the spacers can be etched very uniformly across the cover sheet substrate (e.g. within ±0.1µm across a 100mm (4") wafer). Since the spacers are uniform in height and are always aligned against the same structure on the active-matrix, the control of the cell gap uniformity is improved.

In order that the invention may be more clearly understood, it will now be disclosed in greater detail with reference to the accompanying drawings, wherein:
Fig. 1 is a cross sectional view of a flat panel display structure in accordance with the invention; and

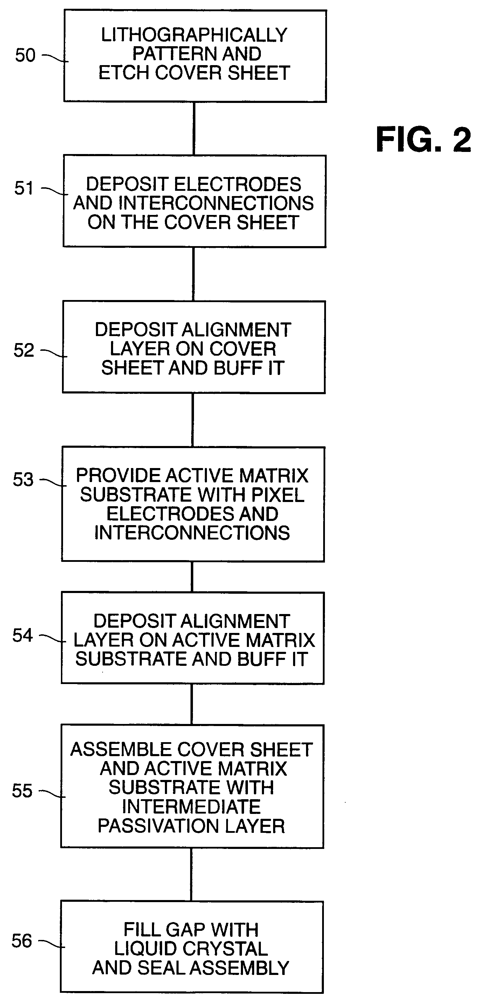

Fig. 2 is a flow diagram illustrating the process of forming a display panel in accordance with the invention.

Referring now to the drawings, in accordance with one embodiment of the invention, a flat cover sheet 10, for example of glass (such as Corning 7059) or quartz, is lithographically patterned, for example with a resist mask, and etched to form a plurality of spacers 11 extending from a surface 12 thereof (step 50). For example, the substrates may be patterned with a positive photoresist and etched with buffered hydrofluoric acid. The cover sheet may be of glass or quartz, although the invention is not limited to this choice of materials. In one example, a quartz cover sheet was formed with spacers having heights of 6.25µm, and base dimensions of about 26.1µm. The cross sections of the spacers are preferably rectilinear, in order to facilitate masking in the formation of the spacers, but the invention is not limited to this specific shape. It is preferable that the sides of the spacers are tapered, with bases of larger size than their tips. The tapered edges of the spacer structure facilitate the coating and buffing of the alignment polyimide layer which will be later provided on the structure. In the above example, the spacers had upper dimensions of about 18µm. Conventional techniques may be employed for forming of the spacers. The spacers 11 are located at positions on the cover sheet that are aligned with particular structures on the active matrix substrate, as will be discussed later.

Electrodes 13 and suitable interconnections are now coated on the surface 12, between the spacers 11 (step 51). These electrodes are formed in a conventional manner, any may be, for example, of ITO. The electrodes 13 are positioned to serve as counter electrodes for pixel electrodes on the active matrix substrate.

Following the deposition of the electrodes 13, the electrodes and any exposed portions of the surface 12 are coated with an alignment layer 14 (step 52). The layer 14 may extend over the tops of the spacers 11. The layer may be, for example, a polyimide, such as RN-753 polyimide, and in accordance with the invention this layer is rubbed as is conventional, for alignment.

An active matrix substrate 20 is provided, which may also be of glass or quartz, has a surface 21 on which pixel electrodes 22, such as of ITO, are deposited (step 53). These electrodes are shaped and interconnected in a conventional manner. For example, data lines 23 may be deposited on the surface 21 for establishing the desired connections to the pixel electrodes. The pixel electrodes, data line and any exposed portions of the surface 21 of the active matrix substrate are then coated with an alignment layer 24, for example of a polyimide, and the layer 24 is rubbed in the conventional manner for alignment (step 54).

The above formed cover sheet and active matrix substrate are then assembled with the spacers 11 directed toward the surface 21 of the active matrix substrate, with a passivation layer 30 on the active matrix substrate (step 55). The gap 31 between the thus assembled substrates is filled with a liquid crystal 32, such as ZLI-4792 (step 56), and the sandwich is sealed by suitable conventional techniques (step 56). The passivation layer 30 may be, for example the polyimide PIX-1400 manufactured by Hitachi Chemical Co, and is typically about 1.2µm thick. This layer is used to mechanically protect the entire active matrix, including TFTs, data lines, storage capacitors thereon, although it is not necessary to protect metallic terminal pads.

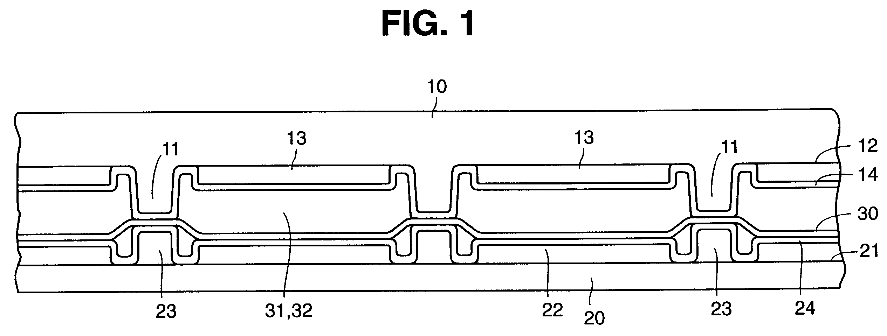

The spacers on the cover sheet are positioned to be aligned with structures of the active matrix substrate, so as not to interfere with the operation of the display panel. The active matrix pixels have many structures, such as, for example, TFTs, gate lines, storage capacitors, ITO electrodes, etc, that have different topographical heights. It is preferred that the spacers on the cover sheet substrate be aligned with the same one of these structures, in each pixel, so that the spacers abut the same structural element in each pixel of the active matrix. For example, as illustrated in Fig. 1, the spacers 11 may be aligned with the data lines 23 in each pixel of the active matrix. The spacers may, however, be alternatively aligned with other structures of the active matrix substrate or portions of the surface 21 of the active matrix substrate on which pixel structures are not present.

Cells that were assembled using integrated spacers as discussed above, have been found to be satisfactory, and have good alignment even around the spacers. Such cells had gaps of from about 6.5 to 6.6 µm, when the integrated spacers 11 were about 6.3µm high, and from about 5.5 to 5.6µm when the spacers were about 5.1µm high. The observed alignment around the spacers was good for the assembled cells. The spacers did not scratch or damage the passivation layer on the passivation layer, nor did the provision of the spacers adversely affect the rubbing of the alignment layer in the vicinity of the spacers.

While the invention has been specifically described with reference to flat panel liquid crystal displays, it is apparent that is may also be employed advantageously for other devices that require two planar surfaces separated by a controlled gap.

## Claims

1. A method for fabricating a flat panel structure comprising lithographically patterning and etching a cover sheet (10) to have a surface with a plurality of spacers (11) extending therefrom, providing an active matrix substrate (20), and assembling said cover sheet on said active matrix substrate with said surface directed toward said active matrix substrate, whereby a gap (31) is formed between said active matrix substrate and portions of said cover sheet between said spacers.

2. The method of claim 1 further comprising filling said gap (31) between said cover sheet and active matrix substrates with a liquid crystal material (32).

3. The method of claim 1 or claim 2 further comprising depositing electrodes (13) on said surface between said spacers.

4. The method of any one of claims 1 to 3 further comprising applying an alignment layer (14) on said electrodes (13) and said spacers (11).

5. The method of claim 3 wherein said active matrix substrate has a plurality of pixels thereon, each of which has a plurality of structures, the structures of each pixel corresponding to structures of each other pixel, comprising aligning said spacers (11) with corresponding structures (23) of a plurality of said pixels.

6. A flat panel assembly comprising a flat cover sheet substrate (10) having a first surface with a plurality of spacers (11) integrally formed on said first surface, and a flat active matrix substrate (20) assembled adjacent said first surface of said cover sheet, whereby a gap (31) is formed between said first surface of said cover sheet and said active matrix.

7. The flat panel assembly of claim 6 wherein said active matrix substrate has a plurality of pixels thereon, each of which has a plurality of structures (23) corresponding to like elements of a plurality of others of said pixels, said spacers (11) being aligned with corresponding elements of a plurality of pixels of said active matrix substrate.

8. A flat panel liquid crystal display comprising a cover sheet (10) having one surface with a plurality of spacers (11) lithographically formed to extend from said surface, an active matrix substrate (20), said cover sheet being positioned adjacent said active matrix substrate with said spacers (11) facing said active matrix substrate to define a gap (31) between said cover sheet and said active matrix substrate, and a liquid crystal material (32) in said gap.

9. The flat panel liquid crystal display of claim 8 further comprising an electrode arrangement (13) on said surface of said cover sheet between said spacers, and an alignment layer (14) on said cover sheet covering said electrode arrangement (13) and covering said spacers (11).

10. The flat panel liquid crystal display of claim 8 or claim 9 wherein said active matrix substrate (20) has a plurality of pixels thereon, each of which is comprised of a plurality of structures (23) corresponding to structures of other said pixels, and wherein said spacers are aligned with corresponding structures (23) of a plurality of said pixels.
